# FASCICULE DE BREVET EUROPEEN

(11) **EP 2 013 048 B1**
(45) Date de publication et mention de la délivrance du brevet: **12.10.2011**
(21) Numéro de dépôt: 07765985.2
(22) Date de dépôt: 02.05.2007
(51) Int. Cl.: B60J 10/00, B60J 10/08

(54) **DISPOSITIF EN BANDE COMPORTANT UN MATERIAU ADHESIF, PROCEDE DE POSE DANS UN VEHICULE**
STREIFENVORRICHTUNG MIT EINEM HAFTMATERIAL SOWIE VERFAHREN ZU DESSEN BEFESTIGUNG IN EINEM FAHRZEUG
STRIP DEVICE COMPRISING AN ADHESIVE MATERIAL, METHOD FOR FIXING SAME IN A VEHICLE

(30) Priorité: 03.05.2006 FR 0651573
(43) Date de publication de la demande: 14.01.2009
(73) Titulaire: Renault SAS, 92100 Boulogne Billancourt (FR)
(72) Inventeur: LE BERRE, Emmanuel, F-92190 Meudon (FR)
(86) Numéro de dépôt international: PCT/FR2007/051202
(87) Numéro de publication internationale: WO 2007/125267

(56) Documents cités:
- EP-B1- 1 037 758
- DE-A1- 3 638 176
- DE-A1- 3 808 443
- DE-A1- 19 652 459

## Description

La présente invention se rapporte à un dispositif en bande comportant un matériau adhésif.

Elle concerne en particulier un tel dispositif qui comporte le matériau adhésif sur une face externe pour adhésion sur un élément de véhicule.

Le brevet EP1037758 décrit un tel dispositif qui est un joint de véhicule. Le joint comporte une première aile munie sur sa face externe du matériau adhésif. Une deuxième aile, raccordée à la première aile par une articulation. Un logement interne du dispositif, délimité au moins par lesdites ailes, comporte une excroissance formant rail de guidage d'outil. Dans EP1037758, l'excroissance est prévue sur une face de la première aile opposée à celle sur laquelle est placée le matériau adhésif.

Cette solution est particulièrement bien adaptée pour l'utilisation d'un outil de type molette à faire coulisser en roulant dans le logement. Elle est par exemple bien adaptée à être utilisée pour un joint d'étanchéité flexible, très souple, à poser avec collage sur une carrosserie de véhicule dans un entourage de cadre de porte. Elle est par contre moins facile à utiliser dans le cas où le dispositif est par exemple une bande de baguette acoustique assez rigide dont la forme des ailes n'est pas optimale pour une pose en utilisant une molette.

L'invention vise à améliorer un tel dispositif.

L'invention a pour objet un dispositif en bande comportant un matériau adhésif sur une face externe pour adhésion sur un élément de véhicule, par exemple une porte de carrosserie. Le dispositif comporte une première aile longitudinale munie sur la face externe du matériau adhésif et une deuxième aile raccordée à la première aile. Un logement interne du dispositif est délimité au moins par lesdites ailes.

La deuxième aile comporte côté logement une nervure longitudinale parallèle à la première aile, la nervure étant raccordée à une base transversale de la deuxième aile. Une rainure longitudinale du logement est délimitée par la première aile, la base transversale et la nervure.

Avantageusement, la rainure est adaptée être en correspondance d'un organe d'une contre forme d'un outil de pose avec adhésion du dispositif sur l'élément.

Selon d'autres caractéristiques avantageuses de l'invention qui peuvent être prises séparément ou en combinaison :
- la deuxième aile comporte, à l'opposé de la première aile, une lèvre élastique raccordée à la base transversale, la lèvre comportant au moins une portion en regard de la première aile, le logement étant situé entre la première aile, la base transversale et la lèvre,
- la première aile et la base de la deuxième aile raccordée à la nervure sont une armature élastique du dispositif, l'élasticité de la lèvre étant supérieure à l'élasticité de la première aile et à l'élasticité de la deuxième aile,
- à l'opposé de la nervure, sur la deuxième aile, la face externe comporte une zone transversale d'appui,
- à l'opposé de la deuxième aile, la première aile comporte une excroissance transversale d'appui,
- le dispositif est un joint, par exemple acoustique et/ou aérodynamique.

L'invention a également pour objet un procédé de pose d'un dispositif selon l'invention sur un élément de véhicule, par exemple une porte de la carrosserie.

Le procédé selon l'invention comporte une étape dans laquelle le dispositif est chaussé sur une contre forme d'un outil de pose, la contre forme étant insérée dans le logement et la rainure étant mise en correspondance d'un organe de la contre forme, une étape de positionnement du dispositif sur la contre forme contre une surface externe de l'élément du véhicule après enlèvement d'une protection de l'adhésif, une étape de pression du dispositif sur l'élément et une étape de retrait de la contre forme du logement.

Dans l'étape de retrait de la contre forme du logement, le retrait est effectué sensiblement parallèlement à la première aile et transversalement à la base de la deuxième aile.

Avantageusement, la nervure engagée dans la contre forme et la contre forme engagée dans la rainure permettent le maintien en position de la baguette lors de la pose.

L'invention a également pour objet un véhicule qui comporte un élément avec une cavité. Le véhicule comporte un dispositif selon l'invention, le dispositif adhérant sur l'élément en regard d'un espace entre ledit élément et un autre élément du véhicule.

Dans le véhicule, les éléments sont des éléments de carrosserie du véhicule, le dispositif étant un joint de fermeture de l'espace, au moins au bénéfice de la réduction des remous aérodynamiques et/ou du bruit dans l'habitacle.

D'autres caractéristiques et avantages de l'invention apparaîtront clairement à la lecture de la description suivante du mode de réalisation non limitatif de celle-ci, en liaison avec les dessins annexés sur lesquels :
- la figure 1 est une vue en perspective de trois quarts arrière et de dessus d'une porte de véhicule avec un outil de pose d'un dispositif selon l'invention,
- la figure 2 est une section d'un dispositif selon l'invention dans une phase de pose sur un élément de véhicule.

Dans la description qui va suivre, la direction désignée L est la direction longitudinale correspondant à l'axe d'avancement d'un véhicule, la direction désignée T est transversale, la direction désignée V est verticale. L'axe L est orienté de l'avant vers l'arrière du véhicule, l'axe T de la gauche vers la droite et l'axe V du bas vers le haut.

Traditionnellement, un véhicule automobile 10 est équipé d'au moins une porte latérale 12 munie d'un montant avant 14. Un espace sépare le montant avant 14 et un autre élément de carrosserie situé devant ledit montant. L'autre élément de carrosserie est par exemple un montant arrière d'une porte avant du véhicule 10.

Dans l'exemple de réalisation de l'invention décrit ci-après, le dispositif selon l'invention est un dispositif acoustique 18 qui est situé en regard dudit espace.

Le dispositif est ici une baguette acoustique 18 qui s'étend sensiblement à partir d'un pli de carrosserie situé au niveau inférieur des vitres latérales jusqu'au niveau inférieur des portes. La baguette 18 est un joint suffisamment souple pour s'adapter à la forme galbée de la carrosserie et suffisamment rigide pour permettre son montage sur l'élément de carrosserie, comme il sera vu ultérieurement.

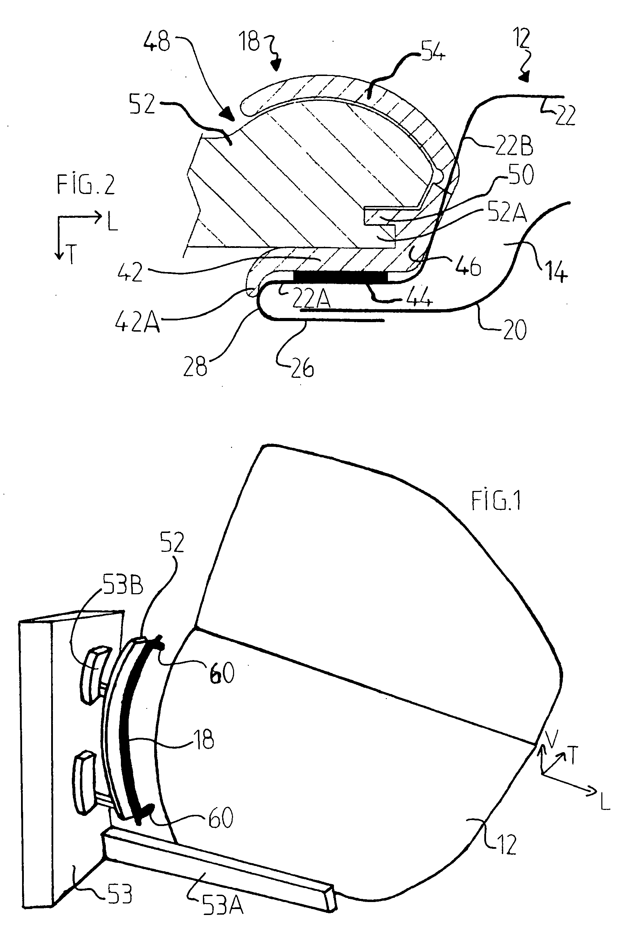

La baguette est fixée sur la porte 12, ici la porte arrière, qui comporte une paroi intérieure 20 côté habitacle et une paroi extérieure 22 (figures 2). La paroi intérieure 20 et la paroi extérieure 22 se raccordent à l'extrémité avant du montant 14.

La tôle extérieure 22 comporte une zone longitudinale d'appui 22A et une zone transversale d'appui 22B. La zone transversale d'appui 22B est inclinée de quelques degrés vers l'arrière et vers l'extérieur par rapport à un plan vertical selon la direction transversale T.

Une tranche avant 28 du montant 14 est formée par un rabat 26 de la tôle extérieure 22 pour son raccordement sur la face intérieure de la paroi intérieure 20.

La tranche avant 28 est située en retrait par rapport au niveau extérieur de la carrosserie visible par le client quand les portes sont fermées, de façon à définir une cavité débouchant à l'extérieur par l'espace libre.

Dans l'exemple de réalisation considéré, en vis-à-vis du rabat 26 de la porte arrière et de la cavité, se trouve une portion arrière de la porte avant, avec aussi un rabat de tôle.

La baguette 18 comporte un profilé vertical extrudé de section globalement en U. La baguette 18 peut donc être produite en bande. Une face externe de la baguette 18 est adaptée à être en appui sur la tôle 22.

La baguette 18 comporte une première aile longitudinale 42 (figure 2). Sur la face externe de la baguette 18, l'aile longitudinale 42 comporte une bande en matériau adhésif double face 44, pour l'adhésion sur la zone 22A de la tôle 22.

La baguette 18 comporte une deuxième aile transversale 46 (figure 2) adaptée à être en appui sur la zone 22B de la tôle 22. La deuxième aile 46 est raccordée à l'extrémité arrière de la première aile 42.

Un logement interne 48 de la baguette 18 est délimité au moins par les ailes 42, 46.

La deuxième aile 46 comporte côté logement 48 une nervure longitudinale 50 parallèle à la première aile 42. La nervure 50 est raccordée à une base transversale de la deuxième aile, c'est-à-dire sur une portion de la deuxième aile la plus proche de la première aile 42. La base est transversale est ici raccordée à la première aile selon une direction incliné à l'opposé de la première aile de 15 degrés par rapport à la direction perpendiculaire à la première aile 42. Au lieu de l'inclinaison à 15 degrés ci-dessus, la base peut être transversale entre une position perpendiculaire à la première aile et une position inclinée à 45 degrés.

Une rainure longitudinale du logement 48 est délimitée par la première aile 42, la base transversale et la nervure 50. La rainure est prévue pour être en correspondance d'un organe formant partie d'une contre forme 52 d'un outil de pose 53, la pose s'effectuant avec adhésion de la baguette 18 sur la tôle 22. Ici, l'organe est une lamelle rigide 52A, la rainure étant de forme complémentaire à la forme de la lamelle.

La première aile 42, la base transversale et la nervure 50 sont des portions de la baguette qui forment une armature en matériau sensiblement rigide. Il est à remarquer qu'à cet effet, l'épaisseur de la deuxième aile 46 est maximale au niveau du raccordement de la nervure 50 avec le reste de l'aile 46. La surépaisseur est aussi présente au fond de la rainure.

La deuxième aile 46 de la baguette 18 comporte, outre sa base transversale d'armature, un organe acoustique adapté à être situé en regard de l'espace séparant le montant avant 14 et l'autre élément de carrosserie. Dans l'exemple de réalisation représenté, l'organe acoustique est une lèvre 54 située en regard de l'espace séparant les montants des portes avant et arrière, au niveau des tôles extérieures des portes visibles par un utilisateur quand les portes sont fermées.

La lèvre 54 est une portion de cylindre qui est raccordée à une extrémité à la base de la deuxième aile 46. L'autre extrémité de la lèvre est libre. La concavité de la lèvre 54 est en regard de la première aile 42. La convexité de la lèvre est prévue pour fermer l'espace entre les éléments de carrosserie.

Les première et deuxième ailes étant élastiques, l'élasticité de la première aile 42 et l'élasticité de la base de la deuxième aile 46 sont inférieures à l'élasticité de la lèvre 54, qui est donc plus souple.

Il est à remarquer qu'à l'opposé de la nervure 50, sur la deuxième aile 46, la face externe de la baguette 18 comporte une zone transversale d'appui sur la zone d'appui 22B. Il est à remarquer qu'à l'opposé de la deuxième aile 46, la première aile 42 comporte une excroissance transversale d'appui 42A, prévue pour l'appui sur la tranche 28.

A chaque extrémité inférieure et supérieure, la baguette 18 comporte des moyens d'encliquetage 60 sur la porte 12 pour un accrochage complémentaire à l'adhésion.

Selon l'invention, le procédé de pose d'un dispositif 18 selon l'invention comporte :
- une étape dans laquelle le dispositif 18 est chaussé sur la contre forme 52 de l'outil de pose 53, la contre forme 52 étant insérée dans le logement 48 et la rainure étant mise en correspondance d'un organe de la contre forme puis,
- une étape de positionnement du dispositif 18 chaussé sur la contre forme 52 contre une surface externe de l'élément du véhicule, ici la zone 22A, après enlèvement d'une protection de l'adhésif puis,

- une étape de pression du dispositif 18 sur l'élément, ici la tôle 22 du montant 14, et enfin,
- une étape de retrait de la contre forme 52 du logement 48.

Il est à remarquer que dans l'étape de retrait de la contre forme 52 du logement 48, le retrait est effectué sensiblement parallèlement à la première aile 42 et transversalement à la base de la deuxième aile 46, au bénéfice de la facilité dégagement de la contre forme. La souplesse de la lèvre 54 permet un retrait sans entrave.

Il est à remarquer que la lèvre 54 participe au maintien ou au moins au bon positionnement de la baguette 18 sur la contre forme 52 pour la pose.

Il est à remarquer que sur la figure 2, la baguette est représentée non déformée, alors qu'elle est comprimée contre la tôle 22 lors de la pose.

Il est à remarquer que l'outil 53 comporte des moyens d'indexation 53A en position sur la porte 12 et des chariots 53B pour faire bouger la contre forme 52 par rapport aux moyens d'indexation et par rapport à la porte. Les chariots sont mobiles au moins pendant l'étape de positionnement du dispositif 18 chaussé sur la contre forme 52 contre et pendant l'étape de retrait.

Dans l'exemple représenté, la contre forme est une sorte de lame sur laquelle vient se chausser toute la baguette. En variante, la contre forme comporte une pluralité de tampons sur laquelle viennent se chausser des tronçons de la baguette. Dans tous les cas, l'utilisation d'une roulette d'application est ainsi évitée.

## Revendications

1. Dispositif (18) en bande comportant un matériau adhésif (44) sur une face externe pour adhésion sur un élément (12) de véhicule, comportant une première aile (42) longitudinale munie sur la face externe du matériau adhésif et une deuxième aile (46) raccordée à la première aile, un logement interne (48) du dispositif étant délimité au moins par lesdites ailes, **caractérisé en ce que** la deuxième aile (46) comporte côté logement (48) une nervure longitudinale (50) parallèle à la première aile (42), la nervure étant raccordée à une base transversale de la deuxième aile (46), une rainure longitudinale du logement (48) étant délimitée par la première aile, la base transversale et la nervure.

2. Dispositif selon la revendication 1, **caractérisé en ce que** la deuxième aile (46) comporte, à l'opposé de la première aile (42), une lèvre élastique (54) raccordée à la base transversale, la lèvre (54) comportant au moins une portion en regard de la première aile, le logement (48) étant situé entre la première aile, la base transversale et la lèvre.

3. Dispositif selon la revendication précédente, **caractérisé en ce que** la première aile (42) et la base de la deuxième aile (46) raccordée à la nervure sont une armature élastique du dispositif, l'élasticité de la lèvre (54) étant supérieure à l'élasticité de la première aile et à l'élasticité de la deuxième aile.

4. Dispositif selon l'une quelconque des revendications précédentes, **caractérisé en ce qu'**à l'opposé de la nervure (50), sur la deuxième aile (46), la face externe comporte une zone transversale d'appui.

5. Dispositif selon l'une quelconque des revendications précédentes, **caractérisé en ce qu'**à l'opposé de la deuxième aile (46), la première aile (42) comporte une excroissance transversale d'appui (42A).

6. Dispositif selon l'une quelconque des revendications précédentes, **caractérisé en ce qu'**il est un joint de véhicule.

7. Procédé de pose d'un dispositif selon l'une quelconque des revendications précédentes sur un élément (12) de véhicule, comportant une étape dans laquelle le dispositif (18) est chaussé sur une contre forme (52) d'un outil (53) de pose, la contre forme étant insérée dans le logement (48) et la rainure (50) étant mise en correspondance d'un organe (52A) de la contre forme, une étape de positionnement du dispositif (18) sur la contre forme (52) contre une surface externe de l'élément du véhicule après enlèvement d'une protection de l'adhésif, une étape de pression du dispositif sur l'élément et une étape de retrait de la contre forme du logement.

8. Procédé selon la revendication précédente, **caractérisé en ce que** dans l'étape de retrait de la contre forme (52) du logement (48), le retrait est effectué sensiblement parallèlement à la première aile (42) et transversalement à la base de la deuxième aile (46).

9. Véhicule comportant un élément avec une cavité, **caractérisé en ce qu'**il comporte un dispositif (18) selon quelconque des revendications 1 à 6, le dispositif adhérant sur l'élément (12) en regard d'un espace entre ledit élément et un autre élément du véhicule.

10. Véhicule selon la revendication précédente, **caractérisé en ce que** les éléments sont des éléments de carrosserie du véhicule, le dispositif (18) étant un joint de fermeture de l'espace.

## Claims

1. Strip device (18) comprising an adhesive material (44) on an external surface for adhesion to an element (12) of a vehicle, comprising a first longitudinal arm (42) provided on the external surface of the adhesive material and a second arm (46) connected to the first arm, an internal housing (48) of the device being delimited at least by said arms, **characterized in that** the second arm (46) comprises on the housing (48) side a longitudinal rib (50) parallel to the first arm (42), the rib being connected to a transverse base of the second arm (46), a longitudinal groove in the housing (48) being delimited by the first arm, the transverse base and the rib.

2. Device according to Claim 1, **characterized in that** the second arm (46) comprises, opposite the first arm (42), an elastic lip (54) connected to the transverse base, the lip (54) comprising at least a portion facing the first arm, the housing (48) being located between the first arm, the transverse base and the lip.

3. Device according to the preceding claim, **characterized in that** the first arm (42) and the base of the second arm (46) connected to the rib are an elastic reinforcement of the device, the elasticity of the lip (54) being greater than the elasticity of the first arm and the elasticity of the second arm.

4. Device according to any one of the preceding claims, **characterized in that** opposite the rib (50), on the second arm (46), the external surface comprises a transverse bearing region.

5. Device according to any one of the preceding claims, **characterized in that** opposite the second arm (46), the first arm (42) comprises a transverse bearing protuberance (42A).

6. Device according to any one of the preceding claims, **characterized in that** it is a vehicle seal.

7. Method for installing a device according to any one of the preceding claims on a vehicle element (12), comprising a step in which the device (18) is fitted onto a mating form (52) of an installation tool (53), the mating form being inserted into the housing (48) and the rib (50) being brought into correspondence with a member (52A) of the mating form, a step of positioning the device (18) on the mating form (52) against an external surface of the vehicle element once a protective cover for the adhesive has been removed, a step of pressing the device onto the element and a step of removing the mating form from the housing.

8. Method according to the preceding claim, **characterized in that** in the step of removing the mating form (52) from the housing (48), the removal is carried out approximately parallel to the first arm (42) and transversely to the base of the second arm (46) .

9. Vehicle comprising an element having a cavity, **characterized in that** it comprises a device (18) according to any one of Claims 1 to 6, the device adhering to the element (12) opposite a space between said element and another element of the vehicle.

10. Vehicle according to the preceding claim, **characterized in that** the elements are bodywork elements of the vehicle, the device (18) being a seal for closing the space.

## Patentansprüche

1. Bandförmige Vorrichtung (18), die auf einer Außenseite einen Klebstoff (44) zum Kleben auf ein Fahrzeugelement (12) aufweist, die einen ersten Längsflügel (42), der auf der Außenseite mit dem Klebstoff versehen ist, und einen zweiten Flügel (46) aufweist, der mit dem ersten Flügel verbunden ist, wobei eine innere Aufnahme (48) der Vorrichtung mindestens von den Flügeln begrenzt wird, **dadurch gekennzeichnet, dass** der zweite Flügel (46) auf der Seite der Aufnahme (48) eine Längsrippe (50) parallel zum ersten Flügel (42) aufweist, wobei die Rippe mit einer Querbasis des zweiten Flügels (46) verbunden ist, wobei eine Längsrille der Aufnahme (48) vom ersten Flügel, von der Querbasis und von der Rippe begrenzt wird.

2. Vorrichtung nach Anspruch 1, **dadurch gekennzeichnet, dass** der zweite Flügel (46) entgegengesetzt zum ersten Flügel (42) eine elastische Lippe (54) aufweist, die mit der Querbasis verbunden ist, wobei die Lippe (54) mindestens einen Abschnitt gegenüber dem ersten Flügel aufweist, wobei die Aufnahme (48) sich zwischen dem ersten Flügel, der Querbasis und der Lippe befindet.

3. Vorrichtung nach dem vorhergehenden Anspruch, **dadurch gekennzeichnet, dass** der erste Flügel (42) und die mit der Rippe verbundene Basis des zweiten Flügels (46) eine elastische Bewehrung der Vorrichtung sind, wobei die Elastizität der Lippe (54) größer als die Elastizität des ersten Flügels und die Elastizität des zweiten Flügels ist.

4. Vorrichtung nach einem der vorhergehenden Ansprüche, **dadurch gekennzeichnet, dass** die Außenseite auf dem zweiten Flügel (46) entgegensetzt zur Rippe (50) eine Querauflagezone aufweist.

5. Vorrichtung nach einem der vorhergehenden Ansprüche, **dadurch gekennzeichnet, dass** der erste Flügel (42) entgegengesetzt zum zweiten Flügel (46) eine Querauflageausstülpung (42A) aufweist.

6. Vorrichtung nach einem der vorhergehenden Ansprüche, **dadurch gekennzeichnet, dass** sie eine Fahrzeugdichtung ist.

7. Verfahren zum Verlegen einer Vorrichtung nach einem der vorhergehenden Ansprüche auf einem Element (12) eines Fahrzeugs, das einen Schritt, in dem die Vorrichtung (18) auf eine Gegenform (52) eines Verlegewerkzeugs (53) aufgezogen wird, wobei die Gegenform in die Aufnahme (48) eingeführt und die Rippe (50) mit einem Organ (52A) der Gegenform in Verbindung gebracht wird, einen Schritt der Positionierung der Vorrichtung (18) auf der Gegenform (52) gegen eine Außenfläche des Elements des Fahrzeugs nach Entfernen eines Schutzes des Klebstoffs, einen Schritt des Drückens der Vorrichtung auf das Element und einen Schritt der Entnahme der Gegenform aus der Aufnahme aufweist.

8. Verfahren nach dem vorhergehenden Anspruch, **dadurch gekennzeichnet, dass** im Schritt der Entnahme der Gegenform (52) aus der Aufnahme (48) die Entnahme im Wesentlichen parallel zum ersten Flügel (42) und quer zur Basis des zweiten Flügels (46) erfolgt.

9. Fahrzeug, das ein Element mit einem Hohlraum aufweist, **dadurch gekennzeichnet, dass** es eine Vorrichtung (18) nach einem der Ansprüche 1 bis 6 aufweist, wobei die Vorrichtung auf dem Element (12) gegenüber einem Raum zwischen dem Element und einem anderen Element des Fahrzeugs klebt.

10. Fahrzeug nach dem vorhergehenden Anspruch, **dadurch gekennzeichnet, dass** die Elemente Karosserieelemente des Fahrzeugs sind, wobei die Vorrichtung (18) eine Schließdichtung des Raums ist.
